# EUROPEAN PATENT APPLICATION

(11) **EP 4 704 245 A1**
(43) Date of publication of application: **04.03.2026**
(21) Application number: 23936018.3
(22) Date of filing: 09.05.2023
(51) Int. Cl.: H01M 50/489, H01M 50/40, H01M 50/46

(54) **SEPARATOR, ELECTRODE ASSEMBLY, SECONDARY BATTERY AND ELECTRICAL APPARATUS**

(71) Applicant: Contemporary Amperex Technology Co., Limited, Ningde, Fujian 352100 (CN)
(72) Inventor: JIN, Haizu, Ningde, Fujian 352100 (CN); XU, Baoyun, Ningde, Fujian 352100 (CN); TANG, Zheng, Ningde, Fujian 352100 (CN); OUYANG, Shaocong, Ningde, Fujian 352100 (CN); YE, Yonghuang, Ningde, Fujian 352100 (CN)
(74) Representative: Lorenz Seidler Gossel Part. mbB
(86) International application number: PCT/CN2023/092997
(87) International publication number: WO 2024/229690

(57) **Abstract**

This application provides a separator, an electrode assembly, a secondary battery, and an electric apparatus, where a resilience coefficient k of the separator ranges from 10% to 90%, where k = (H₀ - H₁)/H₀ × 100%, H₀ represents an initial thickness of the separator at 25°C, and H₁ represents a thickness of the separator having the initial thickness H₀ after compressed at 25°C with a load of 0.8 MPa for 60 seconds and then relaxed for 60s after the load is removed. The separator of this application has excellent resilience performance.

## Description

### TECHNICAL FIELD

This application relates to the field of battery technology and specifically relates to a separator, an electrode assembly, a secondary battery, and an electric apparatus.

### BACKGROUND

A secondary battery, also known as a rechargeable battery, is a battery that can be repeatedly charged and discharged for multiple uses. In recent years, with the increasingly widespread application of secondary batteries such as lithium-ion batteries and sodium-ion batteries, higher requirements have been imposed on their performance, especially their cycling performance.

Therefore, further improving the cycling performance of secondary batteries remains a technical issue that urgently needs to be addressed.

### SUMMARY

This application is made in view of the above issues, providing a polymer and a preparation method thereof, an electrode plate, a secondary battery, a battery module, a battery pack, and an electric apparatus, to address the issue of low energy density in a lithium-ion battery.

This application is intended to provide a separator to improve the cycling performance of a secondary battery containing the separator. This application is also intended to provide an electrode assembly, a secondary battery, and an electric apparatus containing the separator, thereby achieving improved cycling performance of the secondary battery.

Therefore, according to a first aspect, an embodiment of this application provides a separator, where a resilience coefficient k of the separator ranges from 10% to 90%, where k = (H₀ - H₁)/H₀ × 100%, H₀ represents an initial thickness of the separator at 25°C, and H₁ represents a thickness of the separator having the initial thickness H₀ after compressed at 25°C with a load of 0.8 MPa for 60 seconds and then relaxed for 60s after the load is removed.

According to the technical solution of this embodiment of this application, the separator has excellent resilience performance. During charging of a secondary battery containing the separator, active ions combine with a negative electrode material (for example, through adsorption or chemical bonding), causing volume expansion of the negative electrode material. The compressed separator can absorb the volume expansion of the negative electrode material through its elastic deformation, thereby reducing stress in an electrode plate caused by the volume expansion of the negative electrode material. This mitigates or prevents housing deformation and/or damage to an internal material of the electrode plate due to internal stress, thereby alleviating or preventing deterioration of the cycling performance of the secondary battery. When the secondary battery containing the separator discharges to reduce the volume expansion of the negative electrode active material, the separator can rebound, thereby maintaining good contact with the electrode plate. Thus, the separator according to this embodiment of this application can improve the cycling performance of the secondary battery containing the separator.

In any embodiment of this application, 20% < k ≤ 85%. The resilience coefficient k of the separator falling within an appropriate range can further mitigate or prevent housing deformation and/or damage to the internal material of the electrode plate due to internal stress, thereby alleviating or preventing deterioration of the cycling performance of the secondary battery. When the secondary battery containing the separator discharges to reduce the volume expansion of the negative electrode active material, the separator can rebound, further maintaining good contact with the electrode plate.

In any embodiment of this application, the separator includes a reserved elastic deformation space. During charging of the secondary battery containing the separator, active ions combine with the negative electrode material (for example, through adsorption or chemical bonding), causing volume expansion of the negative electrode material. When the separator is compressed, the reserved elastic deformation space can be elastically compressed, absorbing the volume expansion of the negative electrode material, thereby reducing stress in the electrode plate caused by the volume expansion of the negative electrode material. This further mitigates or prevents housing deformation and/or damage to the internal material of the electrode plate due to internal stress, thereby alleviating or preventing deterioration of the cycling performance of the secondary battery. When the secondary battery containing the separator discharges to reduce the volume expansion of the negative electrode active material, the reserved elastic deformation space can rebound, thereby allowing the separator to maintain good contact with the electrode plate.

In any embodiment of this application, the separator includes a base film, where the base film has a plurality of first hollow cavities distributed therein as the reserved elastic deformation space. The base film in the separator, having the first hollow cavities as the reserved elastic deformation space, can absorb the volume expansion of the negative electrode material, accommodating the expanded volume in a space freed up after compression. This reduces stress in the electrode plate caused by the volume expansion of the negative electrode material, further mitigating or preventing housing deformation and/or damage to the internal material of the electrode plate due to internal stress, thereby alleviating or preventing deterioration of the cycling performance of the secondary battery. When the secondary battery discharges to reduce the volume expansion of the negative electrode active material, the first hollow cavities can rebound, thereby allowing the separator containing the base film with the first hollow cavities to maintain good contact with the electrode plate.

In any embodiment of this application, the separator includes a base film, where the base film is a corrugated film (corrugated film). The corrugated film has a certain resilience along its thickness direction and includes a plurality of protrusions. The plurality of protrusions can be elastically compressed, absorbing the volume expansion of the negative electrode material, and accommodating the expanded volume in the space freed up after compression. This reduces stress in the electrode plate caused by the volume expansion of the negative electrode material, further mitigating or preventing housing deformation and/or damage to the internal material of the electrode plate due to internal stress, thereby alleviating or preventing deterioration of the cycling performance of the secondary battery.

In any embodiment of this application, the separator includes a base film, where a compressive elastic modulus of the base film is 7 MPa-1000 MPa, optionally 8 MPa-300 MPa. When the compressive elastic modulus of the base film falls within the above range, that is, falling within an elastic deformation stage, a ratio of normal stress to corresponding normal strain falls within the above range. During charging of the secondary battery containing the separator, active ions combine with the negative electrode material (for example, through adsorption or chemical bonding), causing volume expansion of the negative electrode material. When the separator is compressed, the compressive elastic modulus of the base film falling within the above range is conducive to maintaining the performance of the separator.

In any embodiment of this application, the separator includes a base film, where the base film is selected from one or more of a polyethylene film, a polyethylene terephthalate film, a polyoxyethylene film, a styrene-butadiene-styrene film, a poly(styrene-block-ethylene/butylene-block-styrene) film, a hydrogenated styrene/isoprene block copolymer film, and a thermoplastic polyester elastomer film. The base film may also be other polyester films or polyether films with excellent resilience performance. The base film made of the above materials inherently has a certain resilience, which can further improve the resilience performance of the separator, thereby improving the cycling performance of the secondary battery containing the separator. The base film made of the above materials also has good strength and toughness, effectively ensuring the safety of the secondary battery containing the separator.

In any embodiment of this application, the separator includes a coating, where the coating is disposed on at least one side of the base film. The separator containing the coating has excellent resilience. On one hand, the coating is less prone to brittle fracture or detachment during winding and bending, exhibiting good mechanical processing performance. On the other hand, during charging of the secondary battery containing the separator, active ions combine with the negative electrode material (for example, through adsorption or chemical bonding), causing volume expansion of the negative electrode material. When the separator is compressed, the coating has good compressibility. When discharging is performed to reduce the volume expansion of the negative electrode active material, the separator with the coating can enhance the contact effect with the electrode plate, thereby preventing deterioration of the cycling performance of the secondary battery containing the separator.

In any embodiment of this application, the coating contains a plurality of second hollow cavities distributed therein. The coating in the separator, having the second hollow cavities as the reserved elastic deformation space, can absorb the volume expansion of the negative electrode material during charging of the secondary battery, accommodating the expanded volume in the space freed up after compression. This reduces stress in the electrode plate caused by the volume expansion of the negative electrode material, further mitigating or preventing housing deformation and/or damage to the internal material of the electrode plate due to internal stress, thereby alleviating or preventing deterioration of the cycling performance of the secondary battery. When discharging is performed to reduce the volume expansion of the negative electrode active material, the first hollow cavities can rebound, thereby allowing the separator containing the base film with the first hollow cavities to maintain good contact with the electrode plate.

In any embodiment of this application, the coating is a corrugated coating. The corrugated coating has a certain resilience along its thickness direction, and the corrugated coating includes a plurality of protrusions. The plurality of protrusions can be elastically compressed, absorbing the volume expansion of the negative electrode material, and accommodating the expanded volume in the space freed up after compression. This reduces stress in the electrode plate caused by the volume expansion of the negative electrode material, further mitigating or preventing housing deformation and/or damage to the internal material of the electrode plate due to internal stress, thereby alleviating or preventing deterioration of the cycling performance of the secondary battery.

In any embodiment of this application, an elastic deformation space is present between the coating and a coated surface of the base film. The elastic deformation space between the coating and the coated surface of the base film can be elastically compressed, absorbing the volume expansion of the negative electrode material, and accommodating the expanded volume in the space freed up after compression. This reduces stress in the electrode plate caused by the volume expansion of the negative electrode material, further mitigating or preventing housing deformation and/or damage to the internal material of the electrode plate due to internal stress, thereby alleviating or preventing deterioration of the cycling performance of the secondary battery.

In any embodiment of this application, the coating includes a polymer and a filler.

In any embodiment of this application, the polymer includes one or more of polyoxyethylene, styrene-butadiene-styrene, a poly(styrene-block-ethylene/butylene-block-styrene) material, a hydrogenated styrene/isoprene block copolymer, and a thermoplastic polyester elastomer. The polymer may also be another polyester film or polyether film with excellent resilience performance. The coating made of the above polymer materials inherently has a certain resilience, thereby improving the cycling performance of the secondary battery. The coating made of the above polymer materials also has good strength and toughness.

According to a second aspect, an embodiment of this application provides an electrode assembly including a positive electrode plate, a negative electrode plate, and a separator sandwiched between the positive electrode plate and the negative electrode plate, where the separator is the separator according to the first aspect.

In any embodiment of this application, a rebound amount k × H₀ of the separator has a linear relationship with a thickness Q of the positive electrode plate.

The thickness Q of the positive electrode plate has a linear relationship with a deposition amount of active ions, such as lithium ions or sodium ions, contained in the positive electrode plate that can be deposited on the negative electrode plate. The rebound amount of the separator, denoted as k × H₀, can be understood as the separator having a certain rebound amount with a resilience coefficient k, allowing the thickness Q of the positive electrode plate to release a corresponding amount of active ions during charging. The active ions combine with a negative electrode material (for example, through adsorption or chemical bonding), causing volume expansion of the negative electrode material. The compressed separator can absorb the volume expansion of the negative electrode material through its elastic deformation, thereby reducing stress in an electrode plate caused by the volume expansion of the negative electrode material. This mitigates or prevents housing deformation and/or damage to an internal material of the electrode plate due to internal stress, thereby alleviating or preventing deterioration of the cycling performance of the secondary battery. When a secondary battery containing the separator discharges to reduce the volume expansion of the negative electrode active material, the separator can rebound, thereby maintaining good contact with the electrode plate.

In any embodiment of this application, Q = α × k × H₀, where α ranges from 20 to 50.

Optionally, k × H₀ ranges from 1.5 µm to 4 µm; and optionally, Q ranges from 30 µm to 200 µm.

The rebound amount of the separator, denoted as k × H₀, and the thickness Q of the positive electrode plate satisfying the above relationship allows the thickness Q of the positive electrode plate to release a corresponding amount of active ions. The active ions combine with the negative electrode material (for example, through adsorption or chemical bonding), causing volume expansion of the negative electrode material. The compressed separator can absorb the volume expansion of the negative electrode material through its elastic deformation. The cooperative action of the rebound amount k × H₀ of the separator and the thickness Q of the positive electrode plate can mitigate or prevent deterioration of the cycling performance of the secondary battery. When the secondary battery containing the separator discharges to reduce the volume expansion of the negative electrode active material, the separator can rebound, thereby maintaining good contact with the electrode plate.

In any embodiment of this application, a maximum gap between the negative electrode plate and the separator is less than or equal to 200 µm. In the electrode assembly containing the negative electrode plate and the separator, during formation or charging and discharging, the gap between the negative electrode plate and the separator falling within the above range can maintain good contact with the electrode plate.

According to a third aspect, an embodiment of this application provides a secondary battery including the electrode assembly according to the second aspect.

According to a fourth aspect, an embodiment of this application provides an electric apparatus including the secondary battery according to the third aspect. The secondary battery or electric apparatus of this application includes the separator according to the first aspect, thereby at least possessing the advantages associated with the application of the separator.

### BRIEF DESCRIPTION OF DRAWINGS

To more clearly illustrate the technical solutions of the embodiments of this application, the drawings required for describing the embodiments of this application are briefly described below. It is apparent that the drawings described below are merely some embodiments of this application, and those of ordinary skill in the art can obtain other drawings based on the drawings without creative effort.
FIG. 1 is a schematic diagram of a base film according to an embodiment of this application.
FIG. 2 is a schematic diagram of a corrugated base film according to an embodiment of this application.
FIG. 3 is a schematic diagram of a separator including a coating according to an embodiment of this application.
FIG. 4 is a schematic diagram of a corrugated coating according to an embodiment of this application.
FIG. 5 is a schematic diagram of a separator including a corrugated coating according to another embodiment of this application.
FIG. 6 is a schematic diagram of a secondary battery according to an embodiment of this application.
FIG. 7 is a schematic exploded view of the secondary battery shown in FIG. 4.
FIG. 8 is a schematic diagram of an electric apparatus using a secondary battery of this application as a power source according to an embodiment of this application.

In the drawings, the drawings are not necessarily drawn to actual scale.

### DESCRIPTION OF EMBODIMENTS

Hereinafter, embodiments specifically disclosing a polymer and a preparation method thereof, an electrode plate, a secondary battery, a battery module, a battery pack, and an electric apparatus of this application are described in detail with appropriate reference to the drawings. However, unnecessary detailed descriptions may be omitted. For example, detailed descriptions of well-known matters or redundant descriptions of substantially identical structures may be omitted. This is to avoid unnecessarily lengthy descriptions and facilitate understanding by those skilled in the art. Additionally, the drawings and the following descriptions are provided to allow those skilled in the art to fully understand this application and are not intended to limit the subject matter recited in the claims.

"Ranges" disclosed in this application are defined in the form of lower and upper limits. A given range is defined by one lower limit and one upper limit selected, where the selected lower and upper limits define boundaries of that particular range. Ranges defined in this manner may include or exclude the endpoints and can be arbitrarily combined, meaning any lower limit can be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In this application, unless otherwise stated, the numerical range "a-b" represents a shorthand representation of any combination of real numbers between a and b, where both a and b are real numbers. For example, the numerical range "0-5" means all real numbers between "0-5" have been listed herein, and "0-5" is merely a shorthand representation of these numerical combinations. Additionally, when a parameter is expressed as an integer greater than or equal to 2, it is equivalent to disclosing that the parameter is, for example, an integer 2, 3, 4, 5, 6, 7, 8, 9, 10, 11, 12, and so on.

Unless otherwise specified, all embodiments and optional embodiments of this application can be combined with each other to form new technical solutions.

Unless otherwise specified, all technical features and optional technical features of this application can be combined with each other to form new technical solutions.

Unless otherwise specified, all steps of this application can be performed sequentially or randomly, preferably sequentially. For example, a method including steps (a) and (b) indicates that the method may include steps (a) and (b) performed sequentially, or steps (b) and (a) performed sequentially. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application may be inclusive or exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B." More specifically, any of the following conditions satisfy the condition "A or B": A is true (or present) and B is false (or not present); A is false (or not present) and B is true (or present); or both A and B are true (or present).

Unless otherwise specified, in this application, the term "active ions" refers to ions that can intercalate and deintercalate back and forth between positive and negative electrodes of a secondary battery, including but not limited to lithium ions, sodium ions, and the like.

The term "several" appearing in this application refers to two or more (including two).

The term "major diameter" appearing in this application can be understood as a maximum value of a major diameter measured in an elastic deformation space.

The secondary battery mentioned in the embodiments of this application may be a lithium-ion battery, a sodium-ion battery, a lithium metal battery, a sodium metal battery, or the like. This is not limited in the embodiments of this application.

A secondary battery includes an electrode assembly and an electrolyte, where the electrode assembly includes a positive electrode plate, a negative electrode plate, and a separator disposed between the positive electrode plate and the negative electrode plate. The electrode plate undergoes volume expansion during resting and formation after electrolyte injection, which leads to an increase in an overall thickness of the battery, thereby affecting battery performance. Therefore, this needs to be considered in battery thickness design. The expansion of the electrode plate due to electrolyte injection includes swelling of a binder and stress relaxation expansion between particles. The expansion of the electrode plate during formation includes volume expansion due to the combination of active ions with electrode material particles (for example, through adsorption, intercalation, or chemical bonding) and stress relaxation expansion. Furthermore, it has been found through research that during subsequent charging after battery formation, the negative electrode plate also undergoes volume expansion, primarily due to the migration of active ions from the positive electrode plate to the negative electrode plate and their combination with the negative electrode active material (for example, through adsorption, intercalation, or chemical bonding) or deposition, causing the volume of the negative electrode plate to expand.

When the negative electrode plate undergoes volume expansion, the electrode plate is compressed, generating significant internal stress. Such internal stress may lead to damage to an internal material of the electrode plate (for example, damage to active material particles), deformation of the battery housing, and the like. Additionally, during subsequent discharging of the battery, active ions deintercalate from the negative electrode active material, reducing the volume of the negative electrode active material and causing the negative electrode plate to contract. Such volume contraction deteriorates the contact between the positive electrode plate, the negative electrode plate, and the separator, affecting battery performance. Furthermore, the repeated volume expansion/contraction of the negative electrode plate during charging and discharging may lead to the repeated destruction and reformation of an SEI film, which is detrimental to the stability of the SEI film and further affects the cycling performance of the battery. In summary, the repeated volume expansion/contraction of the electrode plate, particularly the negative electrode plate, during charging and discharging of the battery adversely affects the cycling performance of the battery, posing a challenge to improving the cycling performance of the battery, especially for a sodium-ion secondary battery where the volume expansion effect of the negative electrode plate is significant.

To mitigate the impact of electrode plate volume expansion on the cycling performance of the battery, current measures primarily involve improving the structure of the active material itself to reduce its volume expansion/contraction effect during charging and discharging of the battery. However, it has found through research that improvements to the structure of the active material for this purpose are limited by an available range of active materials, capacity requirements, and other constraints, and cannot address the issue of electrode plate volume expansion caused by other factors (for example, deposition of some of active ions outside the active material).

In view of this, a technical solution of an embodiment of this application provides a separator that can at least mitigate the adverse effects of the repeated volume expansion/contraction of a negative electrode plate during charging and discharging of a battery on the cycling performance of the battery, thereby improving the cycling performance of a secondary battery containing the separator.

### Separator

According to a first aspect, an embodiment of this application provides a separator, where a resilience coefficient k of the separator ranges from 10% to 90%, where k = (H₀ - H₁)/H₀ × 100%, H₀ represents an initial thickness of the separator at 25°C, and H₁ represents a thickness of the separator having the initial thickness H₀ after compressed at 25°C with a load of 0.8 MPa for 60 seconds and then relaxed for 60s after the load is removed.

In this embodiment, "initial thickness" can be understood as a thickness of the separator measured at 25°C, which can be obtained by measuring multiple points on a surface of the separator and taking an average. Alternatively, the prepared separator can be cut into 500 separator samples, and a certain pressure can be applied to measure the "initial thickness" of the 500 separator samples. "Hi" represents an average thickness of the separator after compressed at 25°C with a constant load of 0.8 MPa for 60 seconds and then relaxed for 60s after the load is removed. As an example, a constant force can be applied to the surface of the separator with the "initial thickness": in an initial state, the pressure on the separator is 0.1 MPa; and at 25°C, the separator is compressed at a speed of 5 µm/min with a load pressure of 0.8 MPa, and the separator is continuously compressed at the pressure of 0.8 MPa for 60s. After the force that is the pressure of 0 is removed, the thickness of the separator is measured after an interval of approximately 40 seconds to 5 minutes.

As an example, when the separator is pressed, the separator can be compressed at a speed of 5 µm/min. All the above tests are conducted at 25°C and atmospheric pressure. The tests can be performed using an engineering plastic elastic modulus tester from Shanghai Hengyi Precision Instrument Co., Ltd., such as the HY-1080 model. The tests can refer to the national standard GBT 14694-1993 for the determination of the compressive elastic modulus of plastics.

The separator is disposed between a positive electrode plate and a negative electrode plate, primarily to prevent short circuits between a positive electrode and a negative electrode.

The separator according to this embodiment of this application has excellent resilience performance. During charging of a secondary battery containing the separator, even if active ions combine with a negative electrode material (for example, through adsorption or chemical bonding), causing volume expansion of the negative electrode material, the compressed separator can absorb the volume expansion of the negative electrode material through its elastic deformation, thereby reducing stress in an electrode plate caused by the volume expansion of the negative electrode material. This mitigates or prevents housing deformation and/or damage to an internal material of the electrode plate due to internal stress, thereby alleviating or preventing deterioration of the cycling performance of a secondary battery. When a secondary battery containing the separator discharges to reduce the volume expansion of the negative electrode active material, the separator can rebound, thereby maintaining good contact with the electrode plate. Additionally, since the separator can provide a buffer for the volume expansion/contraction of the negative electrode plate, the impact on an SEI film during the volume expansion/contraction of the negative electrode plate can be reduced, improving the stability of the SEI film. Thus, the separator according to this embodiment of this application can improve the cycling performance of the secondary battery containing the separator.

Furthermore, the separator with excellent resilience performance is less prone to fracture or damage during winding or processing, and has uniform thickness, improving the safety performance of the battery.

In some optional embodiments, k may be any one or more of 15%-95%, 15%-90%, 20%-95%, and 20%-90%.

In some optional embodiments, 20% < k ≤ 85%. Optionally, k may be any one or more of 25%-50%, 25%-55%, 25%-60%, 25%-65%, 25%-70%, 25%-75%, 25%-80%, 25%-85%, 30%-50%, 30%-55%, 30%-60%, 30%-65%, 30%-70%, 30%-75%, 30% -80%, 30%-85%, 35%-50%, 35%-55%, 35%-60%, 35%-65%, 35%-70%, 35%-75%, 35%-80%, 35%-85%, 40%-50%, 40%-55%, 40%-60%, 40%-65%, 40%-70%, 40%-75%, 40%-80%, 40%-85%, 45%-50%, 45%-55%, 45%-60%, 45%-65%, 45%-70%, 45%-75%, 45%-80%, 45%-85%, 50%-55%, 50%-60%, 50%-65%, 50%-70%, 50%-75%, 50%-80%, 50%-85%, 55%-60%, 55%-65%, 55%-70%, 55%-75%, 55%-80%, 55%-85%, 60%-65%, 60%-70%, 60%-75%, 60%-80%, 60%-85%, 65%-70%, 65%-75%, 65%-80%, 65%-85%, 70%-75%, 70%-80%, 70%-85%, 75%-80%, 75%-85%, and 80%-85%. The resilience coefficient k of the separator falling within an appropriate range can further mitigate or prevent housing deformation and/or damage to the internal material of the electrode plate due to internal stress, thereby alleviating or preventing deterioration of the cycling performance of the secondary battery. When the secondary battery containing the separator discharges to reduce the volume expansion of the negative electrode active material, the separator can rebound, further maintaining good contact with the electrode plate.

In some optional embodiments, the separator includes a reserved elastic deformation space. During charging of the secondary battery containing the separator, active ions combine with the negative electrode material (for example, through adsorption or chemical bonding), causing volume expansion of the negative electrode material. When the separator is compressed, the reserved elastic deformation space can be elastically compressed, absorbing the volume expansion of the negative electrode material, thereby reducing stress in the electrode plate caused by the volume expansion of the negative electrode material. This further mitigates or prevents housing deformation and/or damage to the internal material of the electrode plate due to internal stress, thereby alleviating or preventing deterioration of the cycling performance of the secondary battery. When the secondary battery containing the separator discharges to reduce the volume expansion of the negative electrode active material, the reserved elastic deformation space can rebound, thereby allowing the separator to maintain good contact with the electrode plate.

In some optional embodiments, the reserved elastic deformation space may be a plurality of hollow cavities distributed within the separator itself or a plurality of protrusions on the separator itself, such as a reserved elastic deformation space formed by a wavy shape in a thickness direction.

In some optional embodiments, a major diameter D of the reserved elastic deformation space of the separator in the thickness direction is 20 µm-60 µm. The major diameter may be any one of 25 µm, 30 µm, 35 µm, 40 µm, 45 µm, 50 µm, 55 µm, and 60 µm, or a range formed by these values. The major diameter falling within the above range absorbs the volume expansion of the negative electrode material. This reduces stress in the electrode plate caused by the volume expansion of the negative electrode material, mitigating or preventing housing deformation and/or damage to the internal material of the electrode plate due to internal stress, thereby alleviating or preventing deterioration of the cycling performance of the secondary battery. When the secondary battery containing the separator discharges to reduce the volume expansion of the negative electrode active material, the separator can rebound, thereby maintaining good contact with the electrode plate.

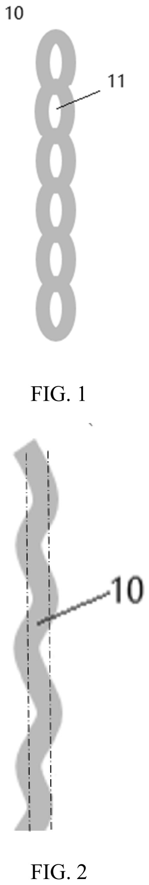

In some optional embodiments, referring to FIG. 1, the separator includes a base film 10, where the base film 10 has a plurality of first hollow cavities 11 distributed therein as an example of the reserved elastic deformation space. The base film in the separator, having the first hollow cavities as the reserved elastic deformation space, can absorb the volume expansion of the negative electrode material, accommodating the expanded volume in a space freed up after compression. This reduces stress in the electrode plate caused by the volume expansion of the negative electrode material, further mitigating or preventing housing deformation and/or damage to the internal material of the electrode plate due to internal stress, thereby alleviating or preventing deterioration of the cycling performance of the secondary battery. When the secondary battery discharges to reduce the volume expansion of the negative electrode active material, the first hollow cavities can rebound, thereby allowing the separator containing the base film with the first hollow cavities to maintain good contact with the electrode plate.

In some optional embodiments, a major diameter D of the first hollow cavity 11 in a thickness direction is 20 µm-60 µm. The major diameter may be any one of 25 µm, 30 µm, 35 µm, 40 µm, 45 µm, 50 µm, 55 µm, and 60 µm, or a range formed by these values. The major diameter of the first hollow cavity in the thickness direction falling within the above range allows the separator to have a certain reserved elastic deformation space, allowing the negative electrode plate to undergo volume expansion to a certain extent.

In some optional embodiments, referring to FIG. 2, the separator includes a base film, where the base film 10 is a corrugated film (corrugated film). The view of the corrugated film in its thickness direction is shown in FIG. 2, where the base film may include a plurality of protrusions spaced apart in a machine direction (Machine Direction, MD for short) and/or a transverse direction (Transverse Direction, TD). The plurality of protrusions spaced apart make the base film itself corrugated. The corrugated film and the dashed line in FIG. 2 form a compressed film with a reserved elastic space. The reserved elastic space has a major diameter in the thickness direction. The corrugated film has a certain resilience along its thickness direction and includes a plurality of protrusions. The plurality of protrusions can be elastically compressed, absorbing the volume expansion of the negative electrode material, and accommodating the expanded volume in the space freed up after compression. This reduces stress in the electrode plate caused by the volume expansion of the negative electrode material, further mitigating or preventing housing deformation and/or damage to the internal material of the electrode plate due to internal stress, thereby alleviating or preventing deterioration of the cycling performance of the secondary battery.

In some optional embodiments, a major diameter D of the corrugated film in the thickness direction is 20 µm-60 µm. The major diameter may be any one of 25 µm, 30 µm, 35 µm, 40 µm, 45 µm, 50 µm, 55 µm, and 60 µm, or a range formed by these values. The major diameter of the reserved elastic space of the corrugated film in the thickness direction falling within the above range allows the separator to have a certain reserved elastic deformation space, allowing the negative electrode plate to undergo volume expansion to a certain extent.

In some optional embodiments, the separator includes a base film, where a compressive elastic modulus of the base film is 7 MPa-1000 MPa, optionally 8 MPa-300 MPa. When the compressive elastic modulus of the base film falls within the above range, that is, falling within an elastic deformation stage, a ratio of normal stress to corresponding normal strain falls within the above range. During charging of the secondary battery containing the separator, active ions combine with the negative electrode material (for example, through adsorption or chemical bonding), causing volume expansion of the negative electrode material. When the separator is compressed, the compressive elastic modulus of the base film falling within the above range is conducive to maintaining the performance of the separator.

The compressive elastic modulus can be measured using test methods commonly used in the art. As an example, the compressive elastic modulus can be tested at room temperature and atmospheric pressure. The tests can be performed using an engineering plastic elastic modulus tester from Shanghai Hengyi Precision Instrument Co., Ltd., such as the HY-1080 model. The tests can refer to the national standard GBT 14694-1993 for the determination of the compressive elastic modulus of plastics.

In some optional embodiments, the separator includes a base film, where the base film is selected from one or more of a polyethylene film, a polyethylene terephthalate film, a polyoxyethylene film, a styrene-butadiene-styrene film, a poly(styrene-block-ethylene/butylene-block-styrene) film, a hydrogenated styrene/isoprene block copolymer film, and a thermoplastic polyester elastomer film. The base film may also be other polyester films or polyether films with excellent resilience performance. The base film made of the above materials inherently has a certain resilience, which can further improve the resilience performance of the separator, thereby improving the cycling performance of the secondary battery containing the separator. The base film made of the above materials also has good strength and toughness, effectively ensuring the safety of the secondary battery containing the separator.

In some embodiments, a material of the separator may include one or more of polypropylene and polyvinylidene fluoride. The separator may be a single-layer film or a multilayer composite film. When the separator is a multilayer composite film, materials of the layers may be the same or different.

As an example, the polyethylene film includes one or more of polyethylene (PE) and a copolymer of ethylene and α-olefin. The α-olefin may be selected from α-olefins having 3-10 carbon atoms. Optionally, the α-olefin is selected from one or more of propylene, 1-butene, and 1-octene. A specific example of the copolymer of ethylene and α-olefin may include one or more of a polyethylene-propylene copolymer, a polyethylene-butene copolymer, a polyethylene-propylene-butene copolymer, and a polyethylene-octene copolymer. A base film formed by a polyethylene polymer as a main polymer can have good strength and toughness, allowing the separator to have a high resilience coefficient, thereby improving the cycling performance of the secondary battery.

In some embodiments, the polyethylene film contains two or more polyethylene polymers, satisfying: 5 < M1/M2 ≤ 20. M1 represents a weight-average molecular weight of a polyethylene polymer with the highest weight-average molecular weight in the base film formulation, and M2 represents a weight-average molecular weight of a polyethylene polymer with the lowest weight-average molecular weight in the base film formulation. When the base film uses two or more polyethylene polymers and molecular weights of the two or more polyethylene polymers satisfy an appropriate relationship, so that the separator can have good overall uniformity and consistency, thereby improving the strength, toughness, and resilience coefficient of the separator.

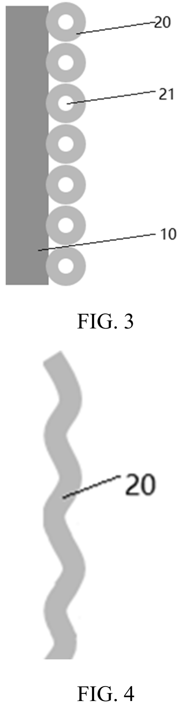

In some embodiments, referring to FIG. 3, the separator includes a coating 20, where the coating 20 is disposed on at least one side of the base film 10. As an example, the base film has two opposite surfaces in its thickness direction, and the coating may be located on either or both of the two surfaces.

According to these embodiments of this application, the separator containing the coating has excellent resilience. On one hand, the coating is less prone to brittle fracture or detachment during winding or bending, exhibiting good mechanical processing performance. On the other hand, during charging of the secondary battery containing the separator, active ions combine with the negative electrode material (for example, through adsorption or chemical bonding), causing volume expansion of the negative electrode material. When the separator is compressed, the coating has good compressibility. When discharging is performed to reduce the volume expansion of the negative electrode active material, the separator with the coating can enhance the contact effect with the electrode plate, thereby preventing deterioration of the cycling performance of the secondary battery containing the separator.

In some embodiments, referring to FIG. 3, the coating contains a plurality of second hollow cavities 21 distributed therein. The coating in the separator, having the second hollow cavities as the reserved elastic deformation space, can absorb the volume expansion of the negative electrode material during charging of the secondary battery, accommodating the expanded volume in the space freed up after compression. This reduces stress in the electrode plate caused by the volume expansion of the negative electrode material, further mitigating or preventing housing deformation and/or damage to the internal material of the electrode plate due to internal stress, thereby alleviating or preventing deterioration of the cycling performance of the secondary battery. When discharging is performed to reduce the volume expansion of the negative electrode active material, the first hollow cavities can rebound, thereby allowing the separator containing the base film with the first hollow cavities to maintain good contact with the electrode plate.

In some embodiments, a major diameter of the second hollow cavity 21 in a thickness direction is 20 µm-60 µm. The major diameter may be an inner diameter. The inner diameter may be any one of 25 µm, 30 µm, 35 µm, 40 µm, 45 µm, 50 µm, 55 µm, and 60 µm, or a range formed by these values. The major diameter of the second hollow cavity in the thickness direction falling within the above range allows the separator to have a certain reserved elastic deformation space, allowing the negative electrode plate to undergo volume expansion to a certain extent.

In some embodiments, referring to FIG. 4, the coating is a corrugated coating. The corrugated coating has a certain resilience along its thickness direction, and the corrugated coating includes a plurality of protrusions. The plurality of protrusions can be elastically compressed, absorbing the volume expansion of the negative electrode material, and accommodating the expanded volume in the space freed up after compression. This reduces stress in the electrode plate caused by the volume expansion of the negative electrode material, further mitigating or preventing housing deformation and/or damage to the internal material of the electrode plate due to internal stress, thereby alleviating or preventing deterioration of the cycling performance of the secondary battery.

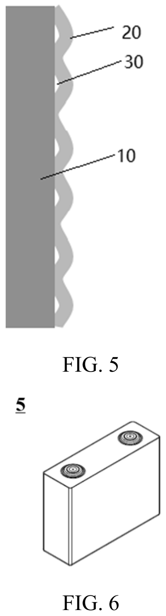

In some embodiments, referring to FIG. 5, an elastic deformation space 30 is present between the coating and a coated surface of the base film. The elastic deformation space between the coating and the coated surface of the base film can be elastically compressed, absorbing the volume expansion of the negative electrode material, and accommodating the expanded volume in the space freed up after compression. This reduces stress in the electrode plate caused by the volume expansion of the negative electrode material, further mitigating or preventing housing deformation and/or damage to the internal material of the electrode plate due to internal stress, thereby alleviating or preventing deterioration of the cycling performance of the secondary battery.

In some embodiments, a major diameter of the elastic deformation space 30 in a thickness direction is 20 µm-60 µm. The major diameter may be any one of 25 µm, 30 µm, 35 µm, 40 µm, 45 µm, 50 µm, 55 µm, and 60 µm, or a range formed by these values. The major diameter of the elastic deformation space in the thickness direction falling within the above range allows the separator to have a certain reserved elastic deformation space, allowing the negative electrode plate to undergo volume expansion to a certain extent.

In some optional embodiments, the coating includes a polymer and a filler.

In some optional embodiments, the polymer includes one or more of polyoxyethylene, styrene-butadiene-styrene, a poly(styrene-block-ethylene/butylene-block-styrene) material, a hydrogenated styrene/isoprene block copolymer, and a thermoplastic polyester elastomer. The polymer may also be another polyester film or polyether film with excellent resilience performance. The coating made of the above polymer materials inherently has a certain resilience, thereby improving the cycling performance of the secondary battery. The coating made of the above polymer materials also has good strength and toughness.

In some embodiments, the coating contains polymer particles. The polymer particles may be one or more of the above polymers. Ion-through channels may be formed between the particles.

In some embodiments, the filler may be inorganic particles. As an example, the inorganic particles include one or more of alumina, silica, titania, calcium carbonate, magnesium oxide, magnesium hydroxide, boehmite, barium titanate, and barium sulfate. These inorganic particles can effectively suppress the further expansion of a short-circuit point area caused by the melting of the separator due to heat generated by a short circuit, thereby further reducing the risk of thermal runaway or short-circuit failure in the secondary battery.

In some embodiments, a mass percentage of the polymer in the coating ranges from 40% to 95%, optionally 40%-99%, 60%-99%, 80%-99%, 80%-97%, 80%-95%, 80%-90%, 90%-97%, or 85%-95%. The coating containing an appropriate amount of polymer can further improve the resilience of the separator, thereby further improving the cycling performance of the secondary battery.

In some embodiments, a thickness of the coating ranges from 0.01 mm to 0.2 mm. Optionally, the thickness of the coating is 0.01 mm-0.2 mm, 0.05 mm-0.2 mm, 0.1 mm-0.2 mm, or 0.05 mm-0.1 mm. The thickness of the coating satisfying the above conditions can effectively improve the resilience of the separator.

The thicknesses of the base film, the separator, the coating, and the major diameter D of the reserved elastic deformation space in the thickness direction of the separator are all well-known meanings in the art and can be tested using instruments and methods known in the art. An exemplary test method for the separator thickness is as follows: A sample with a length of 500 mm and a width of 100 mm is taken; 5 points on the sample are evenly selected (for example, one point is selected every 100 mm along a length direction of the sample); the thicknesses of the separator at these 5 different positions are measured using a micrometer; and an average is taken as the thickness of the separator. The length direction of the sample is parallel to the TD direction of the separator. The thickness of the base film can be tested using the above method. If the separator has the coating on one surface, the thickness of the coating is the thickness of the separator minus the thickness of the base film. If two opposite surfaces of the separator are respectively provided with a coating under test and a coating on an opposite side of the coating under test, the thickness of the coating under test is the thickness of the separator minus the sum of the thicknesses of the base film and the coating on the opposite side.

A porosity of the base film is a well-known meaning in the art and can be tested using instruments and methods known in the art. An exemplary test method is as follows: 5 samples of the base film with dimensions of 100 mm × 100 mm are taken; weights of the samples are tested and an average is taken as the weight M (mg) of the base film; and the porosity X of the base film is calculated using the formula X = [1 - M/(T × S × ρ)] × 100%, where T is the thickness of the base film, S is an area of the base film, and ρ is a density of the polymer in the base film formulation.

The separators in FIG. 1 to FIG. 5 are merely exemplary. For example, in other examples, the separator may include a base film 10 and coatings 20 laminated on two opposite surfaces of the base film 10 in a thickness direction.

In some embodiments, an embodiment of this application further provides a preparation method of a separator. The method includes:
providing a molten base film ingredient containing a polymer and a pore-forming agent;
extruding and cooling the base film ingredient to form a sheet;
stretching the sheet in an MD direction and/or stretching the sheet in a TD direction;
removing the pore-forming agent from the sheet to form a microporous sheet; and
performing heat-setting on the porous sheet to obtain a base film.

The pore-forming agent can be removed from the sheet using methods known in the art to form a porous sheet. For example, the pore-forming agent can be removed by extraction with an extractant. An example of the extractant includes dichloromethane. The extraction can be performed in apparatuses known in the art. As a specific example, the sheet can be drawn to an extraction section with an internal circulation extraction apparatus. An internal circulation extraction method is used to perform countercurrent flushing on the film. The pore-forming agent in the sheet is completely removed using the extractant. The sheet after extraction is dried to obtain a porous sheet. Drying can be performed in apparatuses known in the art, such as a drying oven. The porous sheet can also be subjected to heat-setting using methods and apparatuses known in the art, such as a transverse stretching machine. As an example, the porous sheet can be drawn to a second transverse stretching machine for heat-setting. The second transverse stretching machine may include preheating, stretching, and setting zones. The base film obtained after heat-setting can be wound for later use. The base film can be used as a separator.

In some embodiments, the base film after post-treatment can also be used as a separator. For example, a coating can be formed on the base film. In these embodiments, the preparation method of the separator may further include forming a coating on at least one surface of the base film. As an example, a coating can be formed on either or both surfaces of the base film in the thickness direction. Particles in the coating may be selected from those described herein. A solvent of a slurry for forming the coating may be one or more of an aqueous solvent (for example, deionized water) and an organic solvent (for example, N-methylpyrrolidone NMP, dimethylacetamide DMAC, or acetone). The slurry may further contain a binder. The binder may be a binder commonly used binder in the art. A coating method for the slurry may be one or more of gravure coating (for example, micro-gravure coating), dip coating, blade coating, wire bar coating, spray coating, and electrospinning.

### Electrode assembly

According to a second aspect, an embodiment of this application provides an electrode assembly including a positive electrode plate, a negative electrode plate, and a separator sandwiched between the positive electrode plate and the negative electrode plate, where the separator is the separator according to the first aspect.

In some embodiments, a rebound amount k × Ho of the separator has a linear relationship with a thickness Q of the positive electrode plate.

The thickness Q of the positive electrode plate has a linear relationship with a deposition amount of active ions, such as lithium ions or sodium ions, contained in the positive electrode plate that can be deposited on the negative electrode plate. The rebound amount of the separator, denoted as k × H₀, can be understood as the separator having a certain rebound amount with a resilience coefficient k, allowing the thickness Q of the positive electrode plate to release a corresponding amount of active ions during charging. The active ions combine with a negative electrode material (for example, through adsorption or chemical bonding), causing volume expansion of the negative electrode material. The compressed separator can absorb the volume expansion of the negative electrode material through its elastic deformation, thereby reducing stress in an electrode plate caused by the volume expansion of the negative electrode material. This mitigates or prevents housing deformation and/or damage to an internal material of the electrode plate due to internal stress, thereby alleviating or preventing deterioration of the cycling performance of the secondary battery. When a secondary battery containing the separator discharges to reduce the volume expansion of the negative electrode active material, the separator can rebound, thereby maintaining good contact with the electrode plate.

In some embodiments, Q = α × k × H₀, where α ranges from 20 to 50.

Optionally, k × H₀ ranges from 1.5 µm to 4 µm; and optionally, Q ranges from 30 µm to 200 µm.

The rebound amount of the separator, denoted as k × H₀, and the thickness Q of the positive electrode plate satisfying the above relationship allows the thickness Q of the positive electrode plate to release a corresponding amount of active ions. The active ions combine with the negative electrode material (for example, through adsorption or chemical bonding), causing volume expansion of the negative electrode material. The compressed separator can absorb the volume expansion of the negative electrode material through its elastic deformation. The cooperative action of the rebound amount k × H₀ of the separator and the thickness Q of the positive electrode plate can mitigate or prevent deterioration of the cycling performance of the secondary battery. When the secondary battery containing the separator discharges to reduce the volume expansion of the negative electrode active material, the separator can rebound, thereby maintaining good contact with the electrode plate. In some embodiments, a maximum gap between the negative electrode plate and the separator is less than or equal to 200 µm. In the electrode assembly containing the negative electrode plate and the separator, during formation or charging and discharging, the gap between the negative electrode plate and the separator falling within the above range can maintain good contact with the electrode plate.

### [Negative electrode plate]

A specific composition, structure, and the like of the negative electrode plate can be selected according to the type of a battery cell. This is not limited in the embodiments of this application.

For example, when the battery cell is a lithium-ion battery cell or a sodium-ion battery cell, the negative electrode plate includes a negative electrode current collector and a negative electrode film layer disposed on at least one surface of the negative electrode current collector and including a negative electrode active material. For example, the negative electrode current collector has two opposite surfaces in its thickness direction, and the negative electrode film layer is disposed on either or both of the two opposite surfaces of the negative electrode current collector.

The negative electrode active material is a material capable of deintercalating and intercalating active ions (for example, lithium ions or sodium ions), and materials known in the art can be used as the negative electrode active material. As an example, the negative electrode active material includes but is not limited to one or more of natural graphite, artificial graphite, soft carbon, hard carbon, a silicon-based material, a tin-based material, and lithium titanate. The silicon-based material may include one or more of elemental silicon, silicon oxide, silicon-carbon composite, silicon-nitrogen composite, and a silicon alloy material. The tin-based material may include one or more of elemental tin, tin oxide, and a tin alloy material. This application is not limited to these materials, and other traditionally known materials that can be used as negative electrode active materials may also be used.

In some embodiments, the negative electrode film layer further optionally includes a negative electrode conductive agent. The type of the negative electrode conductive agent is not particularly limited in this application. As an example, the negative electrode conductive agent may include one or more of superconducting carbon, conductive graphite, acetylene black, carbon black, Ketjen black, carbon dots, carbon nanotubes, graphene, and carbon nanofiber.

In some embodiments, the negative electrode film layer further optionally includes a negative electrode binder. The type of the negative electrode binder is not particularly limited in this application. As an example, the negative electrode binder may include one or more of styrene-butadiene rubber (SBR), water-soluble unsaturated resin SR-1B, water-based acrylic resin (for example, polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS).

In some embodiments, the negative electrode film layer further optionally includes another additive. As an example, another additive may include a thickener, for example, sodium carboxymethyl cellulose (CMC-Na) or a PTC thermistor material.

In some embodiments, the negative electrode current collector may be a metal foil or a composite current collector. As an example of the metal foil, a copper foil may be used. The composite current collector may include a polymer substrate and a metal material layer formed on at least one surface of the polymer substrate. As an example, the metal material may include one or more of copper, copper alloy, nickel, nickel alloy, titanium, titanium alloy, silver, and silver alloy. As an example, the polymer substrate may include one or more of polypropylene (PP), polyethylene terephthalate (PET), polybutylene terephthalate (PBT), polystyrene (PS), and polyethylene (PE).

The negative electrode film layer is typically formed by applying a negative electrode slurry on the negative electrode current collector, followed by drying and cold pressing. The negative electrode slurry is typically formed by dispersing the negative electrode active material, an optional conductive agent, an optional binder, and another optional additive in a solvent and stirring to uniformity. The solvent may be N-methylpyrrolidone (NMP) or deionized water, but is not limited thereto.

The negative electrode plate does not exclude other additional functional layers besides the negative electrode film layer. For example, in some embodiments, the negative electrode plate of this application may further include a conductive primer coating (for example, including a conductive agent and a binder) disposed between the negative electrode current collector and the negative electrode film layer on a surface of the negative electrode current collector. In some embodiments, the negative electrode plate of this application may further include a protective layer covering the surface of the negative electrode film layer.

When the battery cell is a lithium metal battery cell, the negative electrode plate may not include a negative electrode active material capable of deintercalating and intercalating active ions. For example, in some embodiments, the negative electrode plate may include a lithium sheet or a lithium alloy sheet. In other embodiments, the negative electrode plate includes a mesh or foam-like three-dimensional skeleton layer, such as copper foam (or copper alloy), nickel foam (or nickel alloy), copper mesh (or copper alloy), or nickel mesh (or nickel alloy).

When the battery cell is a sodium metal battery cell, the negative electrode plate may not include a negative electrode active material capable of deintercalating and intercalating active ions. For example, in some embodiments, the negative electrode plate may include a sodium sheet or a sodium alloy sheet. In other embodiments, the negative electrode plate includes a mesh or foam-like three-dimensional skeleton layer, such as copper foam (or copper alloy), nickel foam (or nickel alloy), aluminum foam (or aluminum alloy), copper mesh (or copper alloy), nickel mesh (or nickel alloy), or aluminum mesh (or aluminum alloy).

### [Positive electrode plate]

In some embodiments, the positive electrode plate includes a positive electrode current collector and a positive electrode film layer disposed on at least one surface of the positive electrode current collector and including a positive electrode active material. For example, the positive electrode current collector has two opposite surfaces in its thickness direction, and the positive electrode film layer is disposed on either or both of the two opposite surfaces of the positive electrode current collector.

The positive electrode film layer includes a positive electrode active material, and the positive electrode active material may be a positive electrode active material known in the art for use in battery cells.

For example, when the battery cell is a lithium-ion battery cell or a lithium metal battery cell, the positive electrode active material may include one or more of a lithium transition metal oxide, a lithium-containing phosphate with an olivine structure, and respective modified compounds thereof. Examples of the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate with an olivine structure may include one or more of lithium iron phosphate, a lithium iron phosphate-carbon composite, lithium manganese phosphate, lithium manganese phosphate-carbon composite, lithium manganese iron phosphate, lithium manganese iron phosphate-carbon composite, and respective modified compounds thereof. This application is not limited to these materials, and other conventionally known materials that can be used as positive electrode active materials may also be used.

In some embodiments, to further increase the energy density of the battery cell, the positive electrode active material may include one or more of lithium transition metal oxide represented by a general formula LiₐNi_{b}Co_{c}M_{d}OₑA_{f} and a modified compound thereof, where 0.8 ≤ a ≤ 1.2, 0.5 ≤ b < 1, 0 < c < 1, 0 < d < 1, 1 ≤ e ≤ 2, and 0 ≤ f ≤ 1; M includes one or more selected from Mn, Al, Zr, Zn, Cu, Cr, Mg, Fe, V, Ti, and B; and A includes one or more selected from N, F, S, and Cl.

As an example, the positive electrode active material may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, and LiMnPO₄.

When the secondary battery is a sodium-ion battery cell or a sodium metal battery cell, the positive electrode active material may include but is not limited to one or more of a sodium-containing transition metal oxide, a polyanionic material (for example, phosphate, fluorophosphate, pyrophosphate, or sulfate), and a Prussian blue material.

As an example, the positive electrode active material may include one or more of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, the Prussian blue material, and a material represented by a general formula XₚM'_{q}(PO₄)ᵣOₓY₃₋ₓ. In the general formula XₚM'_{q}(PO₄)ᵣOₓY₃ₓ, 0 < p ≤ 4, 0 < q ≤ 2, 1 ≤ r ≤ 3, and 0 ≤ x ≤ 2; X includes one or more selected from H⁺, Li⁺, Na⁺, K⁺, and NH₄⁺; M' is a transition metal cation, optionally including one or more selected from V, Ti, Mn, Fe, Co, Ni, Cu, and Zn; and Y is a halogen anion, optionally including one or more selected from F, Cl, and Br.

The modified compounds of the above positive electrode active material may be obtained by doping modification and/or surface coating modification of the positive electrode active material.

In some embodiments, the positive electrode film layer further optionally includes a positive electrode conductive agent. The type of positive electrode conductive agent is not particularly limited in this application. As an example, the positive electrode conductive agent includes one or more of superconducting carbon, conductive graphite, acetylene black, carbon black, Ketjen black, carbon dots, carbon nanotubes, graphene, and carbon nanofiber.

In some embodiments, the positive electrode film layer further optionally includes a positive electrode binder. The type of the positive electrode binder is not particularly limited in this application. As an example, the positive electrode binder may include one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorinated acrylate resin.

In some embodiments, the positive electrode current collector may be a metal foil or a composite current collector. As an example of the metal foil, an aluminum foil may be used. The composite current collector may include a polymer substrate and a metal material layer formed on at least one surface of the polymer substrate. As an example, the metal material may include one or more of aluminum, aluminum alloy, nickel, nickel alloy, titanium, titanium alloy, silver, and silver alloy. As an example, the polymer substrate may include one or more of polypropylene (PP), polyethylene terephthalate (PET), polybutylene terephthalate (PBT), polystyrene (PS), and polyethylene (PE).

The positive electrode film layer is typically formed by applying a positive electrode slurry on the positive electrode current collector, followed by drying and cold pressing. The positive electrode slurry is typically formed by dispersing the positive electrode active material, an optional conductive agent, an optional binder, and any other components in a solvent and stirring to uniformity. The solvent may be N-methylpyrrolidone (NMP), but is not limited thereto.

### [Preparation method]

A preparation method of the battery of this application is well-known. In some embodiments, the positive electrode plate, the separator, the negative electrode plate, and an electrolyte can be assembled to form a secondary battery cell. As an example, the positive electrode plate, the separator, and the negative electrode plate can be formed into an electrode assembly through a winding process and/or a stacking process, and the electrode assembly is placed in an outer packaging, dried, and then injected with the electrolyte, followed by processes such as sealing, resting, formation, and shaping to obtain a battery cell. Multiple battery cells can be further connected in series, parallel, or series-parallel to form a battery module. Multiple battery modules can be further connected in series, parallel, or series-parallel to form a battery pack. In some embodiments, multiple battery cells can alternatively be directly formed into a battery pack.

### Secondary battery

According to a third aspect, an embodiment of this application provides a secondary battery including the electrode assembly according to the second aspect.

The type of the secondary battery is not particularly limited in this application. For example, the secondary battery may be a lithium-ion battery, a sodium-ion battery, or the like. Optionally, the secondary battery may be a sodium-ion battery.

In some embodiments, the secondary battery includes an electrolyte. The electrolyte serves to conduct active ions between a positive electrode plate and a negative electrode plate. The type of the electrolyte is not specifically limited in this application and can be selected according to needs. For example, the electrolyte may be selected from at least one of a solid electrolyte and a liquid electrolyte (that is, a liquid electrolyte).

In some embodiments, the electrolyte is a liquid electrolyte. The liquid electrolyte includes an electrolytic salt and a solvent.

The type of the electrolytic salt is not specifically limited and can be selected according to actual needs. For example, the electrolytic salt includes one or more selected from a lithium salt for a lithium-ion battery and a sodium salt for a sodium-ion battery. As an example, the lithium salt includes one or more selected from lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro(bisoxalato)phosphate (LiDFOP), and lithium tetrafluoro(oxalato)phosphate (LiTFOP). As an example, the sodium salt includes one or more selected from NaPF₆, NaClO₄, NaBCl₄, NaSO₃CF₃, and Na(CH₃)C₆H₄SO₃.

The type of the solvent is not specifically limited and can be selected according to actual needs. In some embodiments, as an example, the solvent may include one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), methyl ethyl sulfone (EMS), and ethyl sulfonyl ethane (ESE).

In some embodiments, the liquid electrolyte further optionally includes an additive. For example, the additive may include a negative electrode film-forming additive, may also include a positive electrode film-forming additive, and may further include an additive capable of improving some performance of the battery, for example, an additive for improving overcharge performance of the battery, an additive for improving high-temperature performance of the battery, or an additive for improving low-temperature power performance of the battery.

In some embodiments, the secondary battery may include an outer package. The outer package may be used to encapsulate the above electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a pouch-type soft pack. A material of the soft pack may be plastic, such as one or more of polypropylene (PP), polybutylene terephthalate (PBT), and polybutylene succinate (PBS).

The shape of the secondary battery is not particularly limited in this application and may be in a flat shape, a cuboid shape, or other shapes. FIG. 6 shows a secondary battery 5 with a cuboid structure as an example.

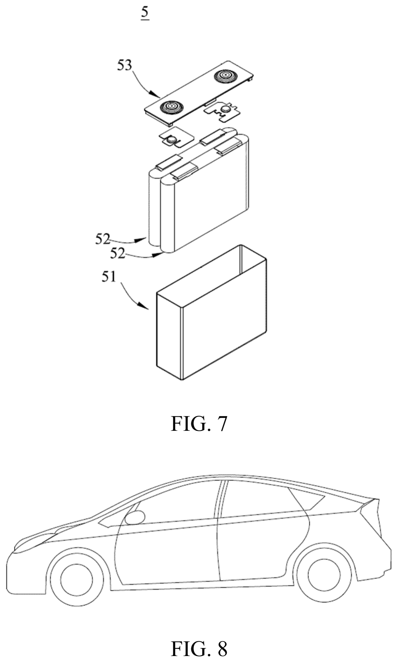

In some embodiments, as shown in FIG. 7, the outer package may include a housing 51 and a cover plate 53. The housing 51 may include a bottom plate and side plates connected to the bottom plate, with the bottom plate and side plates enclosing to form an accommodating cavity. The housing 51 has an opening in communication with the accommodating cavity, and the cover plate 53 is used to cover the opening to seal the accommodating cavity. The electrode assembly 52 according to the first aspect of the embodiments of this application or the electrode assembly 52 prepared using the method according to the second aspect of the embodiments of this application is encapsulated in the accommodating cavity. The electrolyte infiltrates the electrode assembly 52. The number of electrode assemblies 52 contained in the secondary battery 5 may be one or several and can be adjusted according to needs.

A preparation method of the secondary battery of this application is well-known, and the method at least includes the steps of preparing the electrode assembly according to the second aspect of the embodiments of this application. In some embodiments, the electrode assembly can be placed in an outer package, dried, and then injected with the electrolyte, followed by processes of vacuum sealing, resting, formation, and shaping to obtain the secondary battery.

In some embodiments of this application, the secondary battery according to this application can be assembled into a battery module, where the number of secondary batteries contained in the battery module may be multiple, and the specific number can be adjusted according to the application and capacity of the battery module.

Optionally, the battery module may further include an enclosure with an accommodating space, where multiple secondary batteries are accommodated in the accommodating space.

In some embodiments, the above battery module may further be assembled into a battery pack, where the number of battery modules contained in the battery pack can be adjusted according to the application and capacity of the battery pack.

### Electric apparatus

According to a fourth aspect, an embodiment of this application provides an electric apparatus including the secondary battery according to the third aspect. The secondary battery or the electric apparatus of this application includes the separator according to the first aspect, thereby at least possessing the advantages associated with the application of the separator.

The secondary battery can be used as a power source for the electric apparatus or used as an energy storage unit for the electric apparatus. The electric apparatus may be but is not limited to a mobile device (for example, a mobile phone, or a laptop computer), an electric vehicle (for example, a battery electric vehicle, a hybrid electric vehicle, a plug-in hybrid electric vehicle, an electric bicycle, an electric scooter, an electric golf cart, or an electric truck), an electric train, a ship, a satellite, or an energy storage system.

FIG. 8 is a schematic diagram of an electric apparatus as an example. The electric apparatus is a battery electric vehicle, a hybrid electric vehicle, a plug-in hybrid electric vehicle, or the like. To meet the high power and high energy density requirements of the electric apparatus, a battery pack or battery module can be used.

As another example, the electric apparatus may be a mobile phone, a tablet computer, a laptop computer, or the like. Such electric apparatus is typically required to be thin and light and can use a secondary battery as a power source.

### Examples

The following describes the examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

### Preparation of separator

Preparation of base film: Polyethylene was used as a raw material for a raw base film, and a hollow blow molding film process was employed to allow the raw base film to have a first hollow structure as a reserved elastic space, with specific parameters shown in Table 1.

A porosity of the base film was 30%. A thickness d of the base film was 10 µm.

### Preparation of positive electrode plate

94 parts by weight of a positive electrode active material sodium vanadium phosphate, 3 parts by weight of conductive carbon, and 3 parts by weight of a binder PVDF were added to a solvent NMP and mixed and stirred to uniformity. The resulting product was applied on a surface of an aluminum foil, followed by drying, cold pressing, and slitting to obtain a positive electrode plate.

### Preparation of negative electrode plate

97.5 parts by weight of a negative electrode active material artificial graphite, 1.5 parts by weight of a binder SBR, and 1 part by weight of a thickener CMC-Na were added to deionized water and mixed and stirred to uniformity. The resulting product was applied on a surface of a copper foil, followed by drying, cold pressing, and slitting to obtain a negative electrode plate.

### Preparation of electrolyte

11.9 parts by weight of NaPF6 were added to 88.1 parts by weight of a solution of PC, EC, and DEC (at a mass ratio of 1:1:1) and stirred to uniformity until fully dissolved to obtain an electrolyte.

### Preparation of sodium-ion secondary battery

The above positive electrode plate, separator, and negative electrode plate were stacked in order, such that the separator was located between the positive and negative electrode plates for isolation. The resulting stack was wound to obtain a jelly roll. The jelly roll was placed in an outer package, followed by electrolyte injection, sealing, and formation to prepare a sodium-ion secondary battery.

Examples 2 to 5: The preparation methods were similar to that of Example 1 except that the relevant parameters in the preparation steps of the separator were adjusted, with details shown in Table 1.

Examples 7 to 12: The preparation methods were similar to that of Example 1 except that the relevant parameters in the preparation steps of the separator were adjusted to allow the separator to be a corrugated film, with details shown in Table 1.

### Comparative example 1

The separator used in this application was a commercially available polyethylene film, with parameters such as a resilience coefficient shown in Table 1.

### Comparative examples 2 to 7

The preparation methods were similar to that of Example 1 except that the relevant parameters in the preparation steps of the separator were adjusted, with performance-related structures and parameters shown in Table 1.

Examples 13 to 18: The preparation methods were similar to that of Example 1, except that a commercially available polyethylene film was used as a raw material base film. Components of a coating included a thermoplastic polyester elastomer and ceramic powder, where the ceramic powder included Al₂O₃. Through a stretching process, the coating itself had second hollow cavities distributed therein. After drying was performed in an oven, a separator with the coating was obtained. A thickness of the coating was 2 µm, with details shown in Table 2.

### Examples 19 to 24

A commercially available polyethylene film was used as the raw material base film. The components of the coating included a thermoplastic polyester elastomer and ceramic powder, where the ceramic powder included Al₂O₃. Through a stretching process, the coating was corrugated in a thickness direction. The coating was a corrugated coating, and an elastic deformation space was present between the coating and the base film. The components of the coating and the relevant parameters in the preparation steps of the separator were adjusted, with details in Table 2. A separator with a coating was obtained.

Comparative examples 2 to 4: A commercially available stretched base film that was a polyethylene film was used. The preparation method of the coating was similar to that of Example 13 except that the relevant parameters in the coating preparation steps of the separator were adjusted, with details shown in Table 2.

### Examples 25 to 31

The preparation methods were similar to that of Example 19 except that the thicknesses of the positive electrode plates and the thicknesses of the separators were adjusted, with details shown in Table 3.

### Comparative examples 5 to 8

The preparation methods of these comparative examples were sequentially similar to those of Examples 1 and 25 to 47 except that the thicknesses of the positive electrode plates were adjusted, with details shown in Table 3.

### Tests

(1) Test method for resilience coefficient k of separator: At 25°C, a separator of each of the examples or the comparative examples was cut into 500 separator samples and stacked. An initial thickness 500H₀ of the 500-layer separator was measured under a pressure of 0.1 MPa. 500H₁ represented a thickness of the 500-layer separator having the initial thickness H₀ after compressed at 25°C with a load of 0.8 MPa at a speed of 5 µm/min for 60 seconds, followed by relaxation for 60s after the load was removed. The resilience coefficient k was equal to (H₀ - H₁)/H₀.
(2) Test method for rebound amount k × H₀ of separator: After the separator in each of the examples or the comparative examples was subjected to the test in the test method (1), k × H₀ was calculated.
(3) Test method for compressive elastic modulus of separator: The test method was performed with reference to the national standard GBT 14694-1993 for the determination of the compressive elastic modulus of plastics.
(4) Test method for polymer content in coating: An appropriate amount of sample was taken for thermogravimetric analysis, where the temperature was increased from room temperature to 600°C, and a thermogravimetric curve was obtained. A ratio of weight loss at the corresponding temperature to a total weight was the content of the polymer.
(5) Test method for thickness of positive electrode plate: A fully discharged battery was disassembled to remove an electrode plate, thicknesses at 12 points were tested with a thickness gauge, and an average was recorded as the thickness of the positive electrode plate.
(6) Test method for maximum gap between negative electrode plate and separator: CT scanning was performed on a fully discharged cell, and the size of the gap was measured with a ruler in an image.
(7) Test method for major diameter in thickness direction of reserved elastic space: Since a reserved elastic space was related to the hollow design of a material, a major diameter of the reserved elastic space was a maximum compressible space. Therefore, a compression coefficient test method could be used, H₁ measured after the pressure was raised to 10 MPa minus H₀ was the major diameter.
(8) Cycle life performance test: At 25°C, a battery was charged to 3.8 V at 0.33C and subjected to resting for 30 min, and then discharged to 3.8 V at 0.33C and subjected to resting for 30 min. This cycle was repeated until a capacity reached 80% of an initial capacity C; and the number of cycles was recorded.

**Table 1**

| Item | Compressive elastic modulus (MPa) | Separator resilience coefficient | Major diameter of first hollow cavity of base film in thickness direction (µm) | Major diameter of corrugated base film in thickness direction (µm) | Cycle life (cycles) |
|---|---|---|---|---|---|
| Comparative example 1 | 800 | 5% | / | / | 580 |
| Example 1 | 200 | 73% | 60 | / | 3112 |
| Example 2 | 200 | 58% | 50 | / | 2656 |
| Example 3 | 200 | 50% | 40 | / | 2194 |
| Example 4 | 200 | 46% | 35 | / | 1764 |
| Example 5 | 200 | 35% | 30 | / | 1324 |
| Example 6 | 200 | 30% | 25 | / | 1023 |
| Example 7 | 7 | 88% | / | 60 | 2600 |
| Example 8 | 7 | 75% | / | 50 | 2501 |
| Example 9 | 7 | 60% | / | 40 | 2009 |
| Example 10 | 7 | 45% | / | 35 | 1671 |
| Example 11 | 7 | 38% | / | 30 | 1230 |
| Example 12 | 7 | 35% | / | 25 | 929 |

**Table 2**

| Item | Compressive elastic modulus (MPa) | Separator resilience coefficient | Components of coating | Polymer content in coating | Major diameter of second hollow cavity of coating in thickness direction (µm) | Major diameter of elastic deformation space between coating and base film in thickness direction (µm) | Cycle life (cycles) |
|---|---|---|---|---|---|---|---|
| Example 13 | 200 | 58% | Thermoplastic polyester elastomer | 40% | 50 | / | 1003 |
| Example 14 | 200 | 50% | Thermoplastic polyester elastomer | 60% | 40 | / | 1243 |
| Example 15 | 200 | 48% | Thermoplastic polyester elastomer | 70% | 30 | / | 1424 |
| Example 16 | 200 | 46% | Thermoplastic polyester elastomer | 80% | 25 | / | 1617 |
| Example 17 | 200 | 56% | Thermoplastic polyester elastomer | 90% | 55 | / | 1835 |
| Example 18 | 200 | 58% | Thermoplastic polyester elastomer | 95% | 45 | / | 2042 |
| Example 19 | 200 | 18% | Thermoplastic polyester elastomer | 40% | / | 3 | 1202 |
| Example 20 | 200 | 22% | Thermoplastic polyester elastomer | 60% | / | 4 | 1408 |
| Example 21 | 200 | 26% | Thermoplastic polyester elastomer | 70% | / | 5 | 1600 |
| Example 22 | 200 | 25% | Thermoplastic polyester elastomer | 80% | / | 6 | 1872 |
| Example 23 | 200 | 28% | Thermoplastic polyester elastomer | 90% | / | 7 | 2095 |
| Example 24 | 200 | 30% | Thermoplastic polyester elastomer | 95% | / | 8 | 2290 |
| Comparative example 2 | 200 | 8% | Thermoplastic polyester elastomer | 97% | 30 | 5 | 712 |
| Comparative example 3 | 200 | 6% | Thermoplastic polyester elastomer | 70% | 5 | 5 | 688 |
| Comparative example 4 | 200 | 7% | Thermoplastic polyester elastomer | 70% | 30 | 20 | 658 |

**Table 3**

| Item | Thickness Q of positive electrode plate (µm) | Coefficient α | Maximum gap between negative electrode plate and separator (µm) | Cycle life (cycles) |
|---|---|---|---|---|
| Example 1 | 120 | 24 | 170 | 3112 |
| Example 25 | 50 | 24 | 170 | 2046 |
| Example 26 | 50 | 24 | 170 | 2315 |
| Example 27 | 50 | 24 | 170 | 2354 |
| Example 28 | 200 | 24 | 170 | 2507 |
| Example 29 | 120 | 20 | 170 | 2264 |
| Example 30 | 120 | 50 | 170 | 2183 |
| Example 31 | 120 | 50 | 200 | 1982 |
| Comparative example 5 | 20 | 24 | 170 | 645 |
| Comparative example 6 | 220 | 24 | 170 | 776 |
| Comparative example 7 | 120 | 10 | 170 | 741 |
| Comparative example 8 | 120 | 60 | 170 | 511 |

From the test results in Table 1, it can be seen that the resilience coefficient of the separator falling within the above range can prevent the electrode plate from being compressed by deposited ions, thereby avoiding housing deformation and alleviating or preventing deterioration of the cycling performance of the secondary battery. In the discharged state, active ions deintercalate from the negative electrode, the expanded volume decreases, and the separator has certain resilience in the thickness direction, allowing the separator to have good contact with the electrode plate, thereby comprehensively improving the cycling performance of the secondary battery containing the separator.

In Table 1, in Examples 1 to 12, the resilience coefficient of the separator is controlled by controlling the major diameter of the first hollow cavity of the base film in the thickness direction or controlling the major diameter range of the corrugated film in the thickness direction and the material of the base film. When the resilience coefficient in Examples 1 to 12 is 10%-90%, during charging of the secondary battery containing the separator, active ions combine with the negative electrode material (for example, through adsorption or chemical bonding), causing volume expansion of the negative electrode material. The compressed separator can absorb the volume expansion of the negative electrode material through its elastic deformation, thereby reducing stress in the electrode plate caused by the volume expansion of the negative electrode material. This mitigates or prevents housing deformation and/or damage to the internal material of the electrode plate due to internal stress, thereby alleviating or preventing deterioration of the cycling performance of the secondary battery. When the secondary battery containing the separator discharges to reduce the volume expansion of the negative electrode active material, the separator can rebound, thereby maintaining good contact with the electrode plate, and resulting in longer cycle life of the battery. When the resilience coefficient of the separator in Comparative example 1 is less than 10%, the cycle life of the battery is shorter.

In Table 2, in Examples 13 to 24, the resilience coefficient of the separator is controlled by controlling the major diameter of the second hollow cavity of the separator coating in the thickness direction or controlling the major diameter ranges of the corrugated film and base film in the thickness direction as well as the material of the coating. When the resilience coefficient in Examples 13 to 24 is 10%-90%, during charging of the secondary battery containing the separator, active ions combine with the negative electrode material (for example, through adsorption or chemical bonding), causing volume expansion of the negative electrode material. The compressed separator can absorb the volume expansion of the negative electrode material through its elastic deformation, thereby reducing stress in the electrode plate caused by the volume expansion of the negative electrode material. This mitigates or prevents housing deformation and/or damage to the internal material of the electrode plate due to internal stress, thereby alleviating or preventing deterioration of the cycling performance of the secondary battery. When the secondary battery containing the separator discharges to reduce the volume expansion of the negative electrode active material, the separator can rebound, thereby maintaining good contact with the electrode plate, and resulting in longer cycle life of the battery. When the resilience coefficient of the separator in each of Comparative examples 2 to 4 is less than 10%, the cycle life of the battery is shorter.

From the data in Table 3, it can be seen that in Examples 1 and 25 to 31, with the resilience of the separator used, the relationship between the rebound amount of the separator and the thickness Q of the positive electrode plate is controlled to mitigate or prevent deterioration of the cycling performance of the secondary battery while maintaining good contact with the electrode plate. In contrast, in Comparative examples 5 to 8, the designed thickness of the positive electrode plate and the corresponding parameter α for the rebound amount of the separator relative to the thickness Q of the positive electrode plate are not within an appropriate range, which is detrimental to the cycle life of the battery and, in some cases, fails to maintain good contact with the electrode plate.

It should be noted that this application is not limited to the above embodiments. The above embodiments are merely exemplary, and the embodiments within the scope of the technical solution of this application that have substantially the same structure and achieve the same effects as the technical concept all fall within the technical scope of this application. Additionally, various modifications that those skilled in the art can conceive without departing from the essence of this application and other manners constructed by combining some of the constituent elements of the embodiments also fall within the scope of this application.

Although this application has been described with reference to preferred embodiments, various improvements can be made and components therein can be replaced with equivalents without departing from the scope of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A separator, wherein a resilience coefficient k of the separator ranges from 10% to 90%, wherein k = (H₀ - H₁)/H₀ × 100%, H₀ represents an initial thickness of the separator at 25°C, and H₁ represents a thickness of the separator having the initial thickness H₀ after compressed at 25°C with a load of 0.8 MPa for 60 seconds and then relaxed for 60s after the load is removed.

2. The separator according to claim 1, wherein 20% < k ≤ 85%.

3. The separator according to claim 1 or 2, wherein the separator comprises a reserved elastic deformation space.

4. The separator according to any one of claims 1 to 3, wherein the separator comprises a base film, the base film comprising a plurality of first hollow cavities distributed therein as the reserved elastic deformation space.

5. The separator according to any one of claims 1 to 4, wherein the separator comprises a base film, the base film being a corrugated film.

6. The separator according to any one of claims 1 to 5, wherein the separator comprises a base film, a compressive elastic modulus of the base film is 7 MPa-1000 MPa, optionally 8 MPa-300 MPa; and/or
the base film is selected from a polyethylene film, a polyethylene terephthalate film, a polyoxyethylene film, a poly(styrene-butadiene-styrene) film, a poly(styrene-block-ethylene/butylene-block-styrene) film, a hydrogenated styrene/isoprene block copolymer film, a thermoplastic polyester elastomer film, or a combination thereof.

7. The separator according to any one of claims 1 to 6, wherein the separator comprises a coating, the coating being disposed on at least one side of the base film.

8. The separator according to claim 7, wherein the coating comprises a plurality of second hollow cavities distributed therein; and/or
the coating is a corrugated coating; and/or
an elastic deformation space is present between the coating and a coated surface of the base film.

9. The separator according to claim 7 or 8, wherein the coating comprises a polymer and a filler; and
optionally, the polymer comprises one or more of polyoxyethylene, styrene-butadiene-styrene, a poly(styrene-block-ethylene/butylene-block-styrene) material, a hydrogenated styrene/isoprene block copolymer, and a thermoplastic polyester elastomer.

10. An electrode assembly, comprising a positive electrode plate, a negative electrode plate, and a separator disposed between the positive electrode plate and the negative electrode plate, wherein the separator is the separator according to any one of claims 1 to 9.

11. The electrode assembly according to claim 10, wherein a rebound amount k × H₀ of the separator has a linear relationship with a thickness Q of the positive electrode plate.

12. The electrode assembly according to claim 11, wherein Q = α × k × H₀, α ranging from 20 to 50; and
optionally, k × H₀ ranges from 1.5 µm to 10 µm; and optionally, Q ranges from 30 µm to 200 µm.

13. The electrode assembly according to any one of claims 10 to 12, wherein a maximum gap between the negative electrode plate and the separator is less than or equal to 200 µm.

14. A secondary battery, comprising the electrode assembly according to any one of claims 10 to 13.

15. An electric apparatus, comprising the secondary battery according to claim 14.
